Europäisches Patentamt

European Patent Office

Office européen des brevets

(11) Veröffentlichungsnummer: **0 291 656**
**A1**

# EUROPÄISCHE PATENTANMELDUNG

(21) Anmeldenummer: 88104039.8

(51) Int. Cl.⁴: **C04B 30/02**

(22) Anmeldetag: 15.03.88

(30) Priorität: 19.05.87 DE 3716725

(43) Veröffentlichungstag der Anmeldung:
**23.11.88 Patentblatt 88/47**

(84) Benannte Vertragsstaaten:
**AT BE CH DE ES FR GB GR IT LI LU NL SE**

(71) Anmelder: **DIDIER-WERKE AG**
**Lessingstrasse 16-18**
**D-6200 Wiesbaden(DE)**

(72) Erfinder: **Rausch, Miroslav**
**Bärstadterstrasse 16**
**D-6208 Bad Schwalbach 3(DE)**
Erfinder: **Wirth, Ludwig M.**
**Carl-von-Ossietzkystrasse 33**
**D-6200 Wiesbaden(DE)**
Erfinder: **Elstner, Ingo, Dr.**
**Augustastrasse 2b**
**D-6200 Wiesbaden(DE)**
Erfinder: **Nebe, Ulrich, Dr.**
**Friedberger Strasse 3**
**D-6303 Hungen(DE)**

(74) Vertreter: **Brückner, Raimund, Dipl.-Ing.**
**c/o Didier-Werke AG Lessingstrasse 16-18**
**D-6200 Wiesbaden(DE)**

(54) Feuerfeste Formkörper mit einer Dichte von weniger 2,0g/cm3 und Verfahren zu ihrer Herstellung.

(57) Die Erfindung betrifft feuerfeste Formkörper mit einer Dichte von weniger als 2,0 g/cm³, hergestellt aus üblichen feuerfesten Feinbestandteilen, gegebenenfalls feuerfesten oder feuerbeständigen Mineralfasern und weiteren üblichen Zusatzstoffen, sowie Verfahren zu ihrer Herstellung.

Gemäß der Erfindung enthalten solche feuerfesten Formkörper 1 bis 30 Gew.-% an teilweise oder vollständig pyrolisierten, organischen Fasern.

Der Vorteil der erfindungsgemäßen, feuerfesten Formkörper liegt darin, daß sie insbesondere gegenüber NE-Metallschmelzen widerstandsfähig sind.

EP 0 291 656 A1

## Feuerfeste Formkörper mit einer Dichte von weniger 2,0 g/cm³ und Verfahren zu ihrer Herstellung

Die Erfindung betrifft feuerfeste Formkörper mit einer Dichte von weniger als 2,0 g/cm³, hergestellt aus üblichen feuerfesten Feinbestandteilen, gegebenenfalls feuerfesten oder feuerbeständigen Mineralfasern und weiteren üblichen Zusatzstoffen.

Aus der DE 34 36 781 C2 ist ein Verfahren zur Herstellung von Formleichtkörpern aus keramischen Fasern, feinzerteilten Feuerfeststoffen und übliche Zusätze enthaltenden wässrigen Dispersionen bekannt. Gemäß dieser Verfahrensweise wird zunächst eine wässrige Dispersion von keramischen Fasern mit einem kationischen Flockungsmittel ausgeflockt und entweder mit dieser ausgeflockten Dispersion eine zweite, mit einem anionischen Ausflockmittel hergestellte ausgeflockte Schlickerdispersion von feinzerteilten Feuerfeststoffen vermischt, oder zu der ausgeflockten Faserdispersion die feinzerteilten Feuerfeststoffe zugesetzt, vermischt und dann mittels eines anionischen Flockungsmittels ausgeflockt. Weiterhin sind aus der DE 32 11 474 C2 geformte Gegenstände aus Kohlenstoffasern enthaltendem porösem Kohlenstoff sowie ein Verfahren zu ihrer Herstellung bekannt, wobei gemäß dieser vorbekannten Verfahrensweise kurze kohlenstoffhaltige Fasern mit einem harzartigen Bindemittel und einem löslichen, körnigen Bestandteil vermischt werden, aus dieser Mischung unter Druck Formteile hergestellt werden und die körnige Substanz herausgelöst wird, woran sich eine Pyrolysebehandlung bei erhöhter Temperatur anschließt. Weiterhin sind aus der DE 30 09 182 C2 Formkörper aus einem wärmedämmenden Material und ein Verfahren zu deren Herstellung bekannt, wobei die Formkörper aus Mineralfasern bestehen, die in eine Matrix aus pyrolisiertem Kunstharz, Erdölpech oder Teer und gegebenenfalls aus nicht pyrolisierten Anteilen dieser Stoffe eingebettet sind. Die Herstellung dieser vorbekannten Formkörper erfolgt so, daß kohlenstoffhaltige Stoffe in der Faserfüllmasse verteilt werden oder im Fall von flüssigen kohlenstoffhaltigen Stoffen die Faserfüllmasse mit diesen kohlenstoffhaltigen Stoffen getränkt wird, wobei nach einer Formgebung eine Pyrolysebehandlung der kohlenstoffhaltigen Stoffe erfolgt.

Aufgabe der vorliegenden Erfindung ist die Bereitstellung von feuerfesten Formkörpern mit einer Dichte von weniger als 2,0 9/cm³, welche aus üblichen feuerfesten Feinbestandteilen, gegebenenfalls feuerfesten oder feuerbeständigen Mineralfasern und gegebenenfalls weiteren Zusatzstoffen hergestellt werden, sowie ein Verfahren zu ihrer Herstellung, wobei diese feuerfesten Formkörper mechanisch stabile abriebfeste Produkte mit guter Widerstandsfähigkeit gegenüber NE-Metallschmelzen darstellen.

Die erfindungsgemäßen, feuerfesten Formkörper der zuvor beschriebenen Art zeichnen sich dadurch aus, daß sie 1 bis 30 Gew.-% teilweise oder vollständig pyrolisierte organische Fasern und 30 bis 99 Gew.-%, vorzugsweise 30 bis 80 Gew.-%, feuerfeste Feinbestandteile enthalten. Vorzugsweise enthalten die feuerfesten Formkörper 4 bis 15 Gew.-% organische Fasern.

Durch diesen Gehalt an teilweise oder vollständig pyrolisierten organischen Fasern wird ein neuer carbonisierter Faserstoff erhalten, der insbesondere zu sehr dünnwandigen Formkörpern, z.B. Platten und zu Hitzeschutzsystemen in der Raumfahrt verwendet werden kann, da durch den Gehalt an pyrolisierten, organischen Fasern, d.h. Kohlefasern, besonders gute mechanische Eigenschaften, insbesondere Reißfestigkeit, erhalten werden.

Zur Herstellung der feuerfesten Formkörper gemäß der Erfindung werden neben den feuerfesten Feinbestandteilen organische, in der Hitze zu pyrolisierten Kohlenstoffasern umwandelbare Fasern verwendet. Hierbei kann es sich in üblicher Weise um Fasern aus Polyacrylnitril, Cellulose oder Pechfasern handeln. Solche Fasern haben üblicherweise einen mittleren Durchmesser von 8 bis 10 μm, wobei jedoch auch Fasern mit Durchmessern von 35 bis 80 μm verwendet werden können. Die Länge dieser Fasern ist nicht besonders kritisch; unter praktischen Gesichtspunkten werden jedoch Fasern mit einer Maximallänge von 30 mm verwendet. Die Länge der Fasern kann auch von der Dicke bzw. Wandstärke der herzustellenden Formkörper abhängen.

Weiterhin werden zur Herstellung der feuerfesten Formkörper gemäß der Erfindung 30 bis 99 Gew.-%, vorzugsweise 30 bis 80 Gew.-% feuerfeste Feinbestandteile verwendet. Bei solchen feuerfesten Feinbestandteilen handelt es sich um feinzerteilte Feuerfeststoffe mit einer Korngröße von maximal 0,09 mm, z.B. Schamotte, Bauxit, Tonerde, Korund, Zirkoniumdioxid, Zirkoniumsilikat, Magnesiumoxid, Cordierit, Quarzglas, Kohlenstoff bzw. Graphit, Siliziumcarbid und Chromoxid.

Gegebenenfalls können bei der Herstellung der feuerfesten Formkörper gemäß der Erfindung noch feinteiliges Pech, Teer oder Resol- oder Novolakharz verwendet werden. Hierdurch ist es möglich, eine dichtere Phase aus Kohlenstoff bzw. eine Kohlenstoffmatrix zu erhalten, da ein solches Pech, Teer oder Resol- oder Novolakharz bei der Hitzebehandlung ebenfalls gekrackt, d.h. pyrolisiert wird. Zu diesem Zweck muß eine solche Hitzebehandlung natürlich in einer nichtoxidierenden Atmosphäre, z.B. in einer Inertatmosphäre von Stickstoff oder in einer Atmosphäre von CO oder $CO_2$ durchgeführt werden.

Gegebenenfalls können neben diesen feuerfesten Feinbestandteilen auch feinteilige anorganische Bindemittel verwendet werden, z.B. kolloidales $SiO_2$ oder kolloidales $Al_2O_3$. Weiterhin können gegebenenfalls hydraulisch abbindende Feuerfestzemente eingesetzt werden. Beispiele hierfür sind Tonerdeschmelzzemente und Tonerdezemente, d.h. Zemente mit einem hohen $Al_2O_3$-Gehalt.

Bei dem erfindungsgemäßen Verfahren wird zunächst eine wässrige Dispersion, üblicherweise mit einer Konsistenz, d.h. einem Feststoffgehalt von 0,1 bis 2 Gew.-% und vorteilhafterweise von 0,2 bis 0,8 Gew.-% der organischen Fasern hergestellt, zu der gegebenenfalls das feinteilige Pech, der feinteilige Teer oder die feinteiligen Resol-oder Novolakharze in fester Form zugesetzt werden. Die organischen Fasern und die gegebenenfalls vorliegenden, weiteren feinteiligen C-Stoffe werden dann mit einem kationischen Flockungsmittel ausgeflockt. Als kationische Flockungsmittel werden die an sich bekannten Polyelektrolyte verwendet, z.B. Methacrylsäureester oder eine kationische Stärke. Diese kationischen Flockungsmittel werden üblicherweise in einer Menge von 5 g pro 100 kg der Dispersion verwendet, wobei sie im allgemeinen in Form einer Lösung mit einer Konzentration von 0,5 bis 1 Gew.-% angemacht und vor dem Gebrauch auf eine 0,05 bis 0,1 Gew.-%ige Lösung weiter verdünnt werden.

Bei der ersten Ausführungsform des erfindungsgemäßen Verfahrens wird weiterhin eine wässrige Dispersion der feuerfesten Feinbestandteile und gegebenenfalls der feinteiligen, anorganischen Bindemittel und/oder hydraulisch abbindenden Feuerfestzemente hergestellt. Hierbei ist es möglich, nur einen der zuvorgenannten drei Bestandteile oder eine beliebige Kombination hiervon zu verwenden. Diese Dispersion wird üblicherweise in Form eines Schlickers mit einem Feststoffgehalt zwischen 5 und 12 Gew.-% angesetzt. Hierzu wird dann ein anionisches Flockungsmittel zugesetzt.

Als anionische Flockungsmittel können die an sich bekannten anionischen Polyelektrolyte auf Acrylamidbasis verwendet werden, wobei deren Menge üblicherweise 15 g pro 100 kg der Schlickerdispersion beträgt. Diese anionischen Flockungsmittel werden ebenfalls in Form einer Lösung, üblicherweise mit einer Konzentration von 0,25 bis 0,5 Gew.-% angemacht und vor dem Gebrauch auf eine 0,05 bis 0,1 Gew.%ige Lösung weiter verdünnt.

Die beiden zuvorgenannten Dispersionen der organischen Fasern einerseits und der feuerfesten Feinbestandteile andererseits werden sich gegebenenfalls absetzen gelassen und überschüssiges Wasser wird dekantiert. Danach werden diese beiden Dispersionen innig miteinander vermischt und anschließend unter Bildung von Formkörpern entwässert, z.B. im Fall von Platten auf einer Siebentwässerungsanlage. Durch Ablaufen der Flüssigkeit durch den Siebboden der Form, welcher Vorgang noch durch Anlegen von Vakuum unterstützt werden kann, und durch eventuell zusätzlichen Preßdruck wird die Dispersion entwässert und der Formkörper gebildet.

Gemäß der zweiten Ausführungsform des erfindungsgemäßen Verfahrens wird zunächst ebenfalls wiederum eine wässrige Dispersion der organischen Fasern und gegebenenfalls des feinteiligen Pechs, des Teers oder des Resol- oder Novolakharzes hergestellt und mit einem kationischen Flockungsmittel ausgeflockt. In diese ausgeflockte Dispersion werden dann die feuerfesten Feinbestandteile und gegebenenfalls die feinteiligen, anorganischen Bindemittel und/oder hydraulisch abbindenden Feuerfestzemente eingemischt. Anschließend wird dann durch Zugabe des anionischen Flockungsmittels das Ausflocken dieser anorganischen Feuerfestbestandteile bewirkt. Anschließend wird diese Mischung sich absetzen gelassen und wie zuvor unter Bildung von Formkörpern entwässert.

Die nach beiden Verfahrensweisen erhaltenen Formkörper werden getrocknet, üblicherweise bei Temperaturen zwischen 110°C und 180°C. Anschließend erfolgt dann die Hitzebehandlung in einer nichtoxidierenden Atmosphäre zur Pyrolyse der organischen Fasern zu Kohlenstoffasern und von gegebenenfalls vorliegendem Pech, Teer oder Resol- oder Novolakharzen zu einer Kohlenstoff-Phase bzw. Kohlenstoffmatrix.

Die Temperatur bei dieser Pyrolyse- oder Krack-Behandlung hängt einmal von den verwendeten organischen Fasern und den gegebenenfalls weiteren organischen C-Lieferanten, welche eine zusätzliche Kohlenstoffmatrix liefern, ab, weiterhin davon, ob ein vollständig pyrolisierter feuerfester Formkörper erhalten werden soll, oder ob ein Teil dieser Pyrolyse der Formkörper erst beim Einsatz dieser feuerfesten Formkörper erfolgt. Im allgemeinen kann gesagt werden, daß die Pyrolyse bei Tempraturen oberhalb von 600°C weitgehend abgeschlossen ist.

Beim Verfahren der Herstellung wird vorteilhaft in der Stufe a) eine Dispersion verwendet, in der feinteiliges Pech, Teer oder Resol- oder Novolakharz in einer Menge von 1 bis 30 Gew.-%, vorzugsweise 5 bis 30 Gew.-%, bezogen auf den noch nicht pyrolisierten getrockneten Formkörper vorliegt. Die Korngröße dieser Stoffe soll unter 0,09 mm betragen.

Gemäß einer besonders bevorzugten Ausführungsform werden bei der Stufe a) des Verfahrens, d.h. dem Ansatz der Dispersion der organischen Fasern und gegebenenfalls des feinteiligen Pechs, Teers oder Resol-oder Novolakharzes noch feuerfeste oder feuerbeständige Mineralfasern zugesetzt. Die Mineralfasern können bis 50 Gew.-% und vorzugsweise in den Bereichen 1 bis 15 Gew.-% oder 40 bis 50 Gew.-%, bezogen auf den getrockneten Formkörper, vorliegen. Als solche Mineralfasern können sämtliche auf dem Feuerfestgebiet eingesetzten Mineralfasern verwendet werden, wobei diese üblicherweise einen $Al_2O_3$-Gehalt von mindestens 45 Gew.-% besitzen. Solche Fasern werden auch als Aluminiumsilikatfasern bezeichnet. Als Mineralfasern können jedoch auch sogenannte Quarzglasfasern verwendet werden, d.h. aus $SiO_2$ bestehende Fasern, weiterhin auch sogenannte Aluminiumoxidfasern, d.h. Fasern mit einem Gehalt von mindestens 72 Gew.-% $Al_2O_3$.

Durch den Zusatz von feuerfesten oder feuerbeständigen Mineralfasern ist es möglich, die Eigenschaften der erhaltenen feuerfesten Formkörper weitgehend zu steuern und den Anwendungszwecken anzupassen.

Die gegebenenfalls vorliegenden feinteiligen anorganischen Bindemittel und/oder hydraulisch abbindenden Feuerfestzemente liegen üblicherweise in einer Menge bis zu 40 Gew.-%, vorzugsweise mit 5 bis 40 Gew.-%, der feuerfesten Formkörper vor, wobei sich in diesem Fall selbstverständlich die Anteile der anderen Bestandteile entsprechend verringern.

Weiterhin hat es sich als besonders bevorzugt herausgestellt, wenn bei der Herstellung der feuerfesten Formkörper gemäß der Erfindung zu der Dispersion der feuerfesten Feinbestandteile eine metallische Komponente in Form von Pulver von elementarem Silizium oder metallischem Aluminium oder ein Gemisch hiervon zugesetzt wird. Insbesondere kann durch das auch als Antioxidationsmittel bezeichnete elementare Silizium oder metallische Aluminium bei den Formkörpern das kohlenstoffhaltige Material vor dem Angriff durch Oxidation geschützt werden. Das in der Stufe b) des Verfahrens verwendete Aluminium liegt in einer Menge von 3 bis 15 Gew.-%, oder das elementare Silizium liegt in einer Menge von 5 bis 15 Gew.-% vor, jeweils bezogen auf den getrockneten Formkörper. Das Pulver aus Aluminium oder Silizium soll ebenfalls eine Korngröße von maximal 0,09 mm und vorzugsweise von maximal 0,044 mm haben. Bei der Pyrolyse der Formkörper durch die Hitzebehandlung reagiert teilweise das Antioxidationsmittel mit dem Kohlenstoff zu Carbiden.

Die erfindungsgemäßen Formkörper sollen wenigstens 1 Gew.-% an teilweise oder vollständig pyrolisierten, organischen Fasern, d.h. Kohlenstoffasern, enthalten, um Verbesserungen der Festigkeitseigenschaften der Formkörper zu erhalten.

Falls als feuerfester Feinbestandteil, üblicherweise mit einer Korngröße unter 0,09 mm Kohlenstoff bzw. Graphit verwendet wird, muß beim Ansetzen der wässrigen Dispersion der feuerfesten Feinbestandteile, zu welcher ein solcher Graphit zugesetzt wird, gegebenenfalls ein Tensid zugegeben werden, um die Benetzung von solchem Kohlenstoff oder Graphit zu ermöglichen.

Die Erfindung wird anhand der folgenden Beispiele näher erläutert. Die Angaben in Gewichtsprozent sind auf den getrockneten Formkörper bezogen.

Beispiel 1

Zunächst wurde eine Dispersion aus 10 Gew.-% Mineralfasern mit einem $Al_2O_3$-Gehalt von 48 %, 7 Gew.-% Polyacrylnitrilfasern mit einem Durchmesser von 8 bis 10 μm und einer Länge bis zu 4 mm mit einer Feststoffkonzentration von 0,3 Gew.-% in Wasser hergestellt. Mittels einer kationischen Stärke wurde diese Dispersion der Fasern ausgeflockt.

Getrennt hiervon wurde die Dispersion eines Schlickers mit einem Feststoffgehalt von 8 % in Wasser aus 40 Gew.-% Naturgraphit mit einer Korngröße kleiner 90 μm, dem eine geringe Menge eines Benetzungstensids (Warenbezeichnung Tomol) zugesetzt war und 43 Gew.-% SiC-Pulver mit einer Korngröße kleiner 90 μm hergestellt. Dieser Schlicker wurde mit einem anionischen Flockungsmittel auf Acrylamidbasis ausgeflockt.

Beide Dispersionen wurden sich absetzen gelassen und überschüssiges Wasser wurde dekantiert, wobei aus der Faserdispersion etwa 70 % des Wassers und aus der Dispersion der feuerfesten Feinbestandteile etwa 60 % des Wassers abgezogen werden konnte.

Die beiden ausgeflockten Dispersionen wurden anschließend miteinander vermischt, wobei sie gleichzeitig unter ständigem Rühren in einen Behälter einfließen gelassen wurden. Diese Mischung der Dispersionen wurde sich ebenfalls absetzen gelasssen, wobei etwa 50 % der überstehenden klaren Flüssigkeit abgezapft werden konnte. Sämtliche abgezapften Flüssigkeiten, d.h. praktisch reines Wasser, konnten zum Ansetzen neuer Dispersionen verwendet werden.

Die abgesetzte und von überstehender Flüssigkeit befreite Mischung der Dispersionen wurde anschließend auf einem Sieb unter Anlegen von Vakuum entwässert und zu Platten verformt. Die Formkörper wurden dann bei 150°C getrocknet und anschließend bei 800°C in einer nichtoxidierenden Atmosphäre (Stickstoffatmosphäre) pyrolisiert bzw. gekrackt.

Die hergestellten Platten hatten eine Rohdichte von 850 kg/m³.

Beispiel 2

Die Arbeitsweise von Beispiel 1 wurde wiederholt, wobei 7 Gew.-% Polyacrylnitrilfasern und 10 Gew.-% keramische Fasern zur Herstellung der ersten Dispersion verwendet wurden, hierzu wurden zusätzlich aber noch 30 Gew.-% eines feinteiligen Novolakharzes mit einer Teilchengröße von kleiner 90 μm zugesetzt. Diese Dispersion wurde mittels einer kationischen Stärke ausgeflockt. Die zweite Schlickerdispersion enthielt 11 Gew.-% Aluminium-Metall mit einer Korngröße kleiner 90 μm, 34 Gew.-% Quarzglas mit einer Korngröße kleiner 90 μm und 8 Gew.-% kolloidales SiO₂ als anorganisches Bindemittel.

Die Herstellung einer Platte erfolgte entsprechend den Angaben in Beispiel 1.

Beispiel 3

Zur Herstellung der ersten Dispersion wurden 6 Gew.-% Cellulosefasern mit einer Länge unterhalb von 1,5 mm, 12 Gew.-% der in Beispiel 1 verwendeten Mineralfasern und 10 Gew.-% des in Beispiel 2 verwendeten feinteiligen Novolakharzes eingesetzt.

Die zweite Schlickerdispersion enthielt 18 Gew.-% des in Beispiel 1 verwendeten Graphits zusammen mit dem Benetzungstensid und 54 Gew.-% Mullit mit einer Korngröße kleiner 90 μm.

Die Weiterverarbeitung zu Platten erfolgte entsprechend der Arbeitsweise von Beispiel 1.

Beispiel 4

Zur Herstellung der ersten Dispersion wurden 5 Gew.-% der in Beispiel 3 verwendeten Cellulosefasern und 10 Gew.-% gechoppte Quarzglasfasern zusammen mit 25 Gew.-% des zuvor verwendeten Novolakharzes eingesetzt.

In der Schlickerdispersion wurden 25 Gew.-% des zuvor verwendeten Graphits zusammen mit dem Benetzungstensid und 35 Gew.-% saure Schamotte mit einer Korngröße kleiner 90 μm verwendet.

Die Weiterverarbeitung erfolgte wie in Beispiel 1 beschrieben.

Beispiel 5

Es wurde eine wässrige Dispersion mit einem Feststoffgehalt von 0,2 Gew.-% unter Verwendung von 7 Gew.-% Polyacrylnitrilfasern mit einer Länge von 4 mm und einem Durchmesser von 35 bis 50 μm und 3 Gew.-% der in Beispiel 1 verwendeten Mineralfasern hergestellt.

Zur Herstellung der Schlickerdispersion mit einer Konsistenz von 7 % wurden 45 Gew.-% Quarzglas mit einer Korngröße kleiner 44 μm und 5 Gew.-% Aluminium-Pulver mit einer Korngröße kleiner 90 μm und 40 Gew.-% eines Tonerdeschmelzcementes als hydraulisch abbindender Feuerfestzement verwendet.

Diese beiden Dispersionen wurden sich absetzen gelassen, überstehende klare Flüssigkeit entfernt und dann entsprechend der Arbeitsweise von Beispiel 1 weiterverarbeitet, wobei ebenfalls plattenförmige Formkörper hergestellt wurden.

Beispiel 6

Zunächst wurde eine wässrige Dispersion mit einer Konsistenz von 0,8 % unter Verwendung von 3 Gew.-% der in Beispiel 1 verwendeten Polyacrylnitrilfasern und 20 Gew.-% feinteiligem Pech mit einer Korngröße kleiner 90 μm hergestellt. Diese Dispersion wurde mit einer kationischen Stärke ausgeflockt. Anschließend wurden in diese Dispersion 5 Gew.-% Silizium-Pulver mit einer Korngröße kleiner 44 μm, 34 Gew.-% des in Beispiel 5 verwendeten feinteiligen Quarzglases als feinteiliger Feuerfestbestandteil, 2 Gew.-% kolloidales SiO₂ als anorganisches Bindemittel und 36 Gew.-% Tonerdeschmelzcement eingerührt und gründlich hierin dispergiert. Dann wurde die Ausflockung mittels des in Beispiel 1 genannten anionischen Flockungsmittels durchgeführt.

Nach dem Absetzen der Dispersion erfolgte die Entwässerung unter Bildung von Platten auf einem Sieb unter Anlegen eines Vakuums. Die Weiterverarbeitung erfolgte entsprechend den Angaben in Beispiel 1.

Beispiel 7

Die Arbeitsweise von Beispiel 6 wurde wiederholt, wobei zum Ansetzen der Dispersion zunächst 9 Gew.-% Viskosefasern mit einer Länge von 6 mm und einem Durchmesser von 20 mm und 10 Gew.-% feinteiliges Pech verwendet wurden. Nach dem Ausflocken dieser organischen Fasern mit kationischer Stärke wurden zu der ausgeflockten Dispersion 8 Gew.-% Aluminium-Pulver mit einer Korngröße kleiner 44 μm, 33 Gew.-% Quarzglas mit einer Korngröße kleiner 90 μm und 40 Gew.-% Tonerdschmelzcement zugesetzt. Anschließend wurde mit dem anionischen Flockungsmittel ausgeflockt und entsprechend den Angaben in Beispiel 6 zu Platten weiterverarbeitet. Die Pyrolyse erfolgte in diesem Fall bei einer Temperatur von 1200°C.

Beispiel 8

Nach der Arbeitsweise von Beispiel 6 wurde eine Dispersion mit der Konsistenz von 0,6 % unter Verwendung der Polyacrylnitrilfasern nach Beispiel 1 in der Menge von 5 Gew.-%, der keramischen Fasern nach Beispiel 1 in der Menge von 45 Gew.-% und des Novolakharzes nach Beispiel 2 in der Menge von 10 Gew.-% angesetzt und ausgeflockt. Anschließend wurden der Dispersion 15 Gew.-% Graphit der Art von Beispiel 1 und 25 Gew.-% Schamotte mit 42 Gew.-% $Al_2O_3$ Gehalt und der Korngröße kleiner 0,09 mm zugegeben.

Beispiel 9

Nach der Arbeitsweise von Beispiel 6 und 8 wurde die Dispersion zunächst mit 5 Gew.-% Polyacrylnitrilfasern, 10 Gew.-% keramischen Fasern und 5 Gew.-% Novolakharz angesetzt. Als weitere Zusatze wurden 15 Gew.-% Graphit und 65 Gew.-% calcinierte Tonerde in der Körnung kleiner 0,09 mm verwendet.

**Ansprüche**

1. Feuerfeste Formkörper mit einer Dichte von weniger als 2,0g/cm³, hergellest aus üblichen feuerfesten Feinbestandteilen, gegebenenfalls feuerfesten oder feuerbeständigen Mineralfasern und weiteren üblichen Zusatzstoffen, dadurch gekennzeichnet, daß sie 1 bis 30 Gew.-% teilweise oder vollständig pyrolisierte organische Fasern und 30 bis 99 Gew.-% feuerfeste Feinbestandteile enthalten.

2. Feuerfeste Formkörper nach Anspruch 1, dadurch gekennzeichnet, daß sie 4 bis 15 Gew.-% organische Fasern enthalten.

3. Feuerfeste Formkörper nach Anspruch 1, dadurch gekennzeichnet, daß sie 30 bis 80 Gew.-% feuerfeste Feinbestandteile enthalten.

4. Feuerfeste Formkörper nach Anspruch 1, dadurch gekennzeichnet, daß sie weiterhin pyrolisiertes Pech, Teer oder Resol- oder Novolakharz enthalten.

5. Verfahren zur Herstellung von feuerfesten Formkörpern nach Anspruch 1, dadurch gekennzeichnet, daß man:

a) eine wässrige Dispersion von organischen, in der Hitze zu pyrolisierten Kohlenstoffasern umwandelbare Fasern mit einem kationischen Flockungsmittel ausflockt,

b) eine wässrige Dispersion von feuerfesten Feinbestandteilen mit einem anionischen Flockungsmittel ausflockt,

c) die beiden (gegebenenfalls abgesetzten und von überstehender Flüssigkeit befreite Dispersionen) miteinander vermischt, unter Bildung von Formkörpern entwässert, und

d) die Formkörper trocknet und bei Temperaturen zwischen 350°C und 1300°C zur teilweisen oder vollständigen Pyrolyse der organischen Fasern hitzebehandelt.

6. Verfahren zur Herstellung von feuerfesten Formkörpern nach Anspruch 1, dadurch gekennzeichnet, daß man:

a) eine wässrige Dispersion von organischen, in der Hitze zu pyrolisierten Kohlenstoffasern umwandelbare Fasern mit einem kationischen Flockungsmittel ausflockt,

b) zu dieser ausgeflockten Dispersion die feuerfesten Feinbestandteile zusetzt,

c) in diese Mischung die Lösung eines anionischen Flockungsmittels einmischt und die erhaltene Mischung sich absetzen läßt und überschüssige Flüssigkeit entfernt und unter Bildung von Formkörpern entwässert, und

d) die Formkörper trocknet und bei Temperaturen zwischen 350°C und 1300°C zur teilweisen oder vollständigen Pyrolyse der organischen Fasern hitzebehandelt.

7. Verfahren nach Anspruch 5 oder 6, dadurch gekennzeichnet, daß man in Stufe a) eine Dispersion verwendet, welche weiterhin noch feinteiliges Pech, Teer oder Resol- oder Novolakharz in einer Menge von 1 bis 30, vorzugsweise 5 bis 30 Gew.-%, bezogen auf den getrockneten Formkörper, enthält.

8. Verfahren nach einem der Ansprüche 5 bis 7, dadurch gekennzeichnet, daß man in Stufe a) eine wässrige Dispersion verwendet, welche weiterhin feuerfeste oder feuerbeständige Mineralfasern in einer Menge bis 50 Gew.-%, vorzugsweise 1 bis 15 Gew.-% oder 40 bis 50 Gew.-%, bezogen auf den getrockneten Formkörper, enthält.

9. Verfahren nach einem der Ansprüche 5 bis 8, dadurch gekennzeichnet, daß man in Stufe b) weiterhin feinteilige anorganische Bindemittel und/oder hydraulisch abbindende Feuerfestzemente in einer Menge bis 40 Gew.-%, vorzugsweise 5 bis 40 Gew.-%, bezogen auf den getrockneten Formkörper, zusammen mit den feuerfesten Feinbestandteilen verwendet.

10. Verfahren nach einem der Ansprüche 5 bis 9, dadurch gekennzeichnet, daß man in Stufe b) weiterhin feinteiliges Aluminiumpulver in einer Menge von 3 bis 15 Gew.-% oder Siliciumpulver in einer Menge von 5 bis 15 Gew.-%, jeweils bezogen auf den getrockneten Formkörper, neben den feuerfesten Feinbestandteilen verwendet.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-1 280 295 (FOSECO INTERNATIONAL LTD) <br> * Ansprüche 1,2,4-7; Beispiel 1 * | 1-3 | C 04 B 30/02 |
| Y | --- | 4-9 | |
| Y | EP-A-0 070 650 (THE BABCOCK & WILCOX CO.) <br> * Ansprüche 1,2,4; Seite 4, Zeilen 32-37 * | 4,7 | |
| A | --- | 5,6 | |
| Y,D | GB-A-2 165 230 (DIDIER-WERKE AG) <br> * Ansprüche 1-5,10 * | 5-9 | |
| X | EP-A-0 073 854 (TOPPAN PRINTING CO.,LTD) <br> * Anspruch 1; Beispiel 4; Seite 5, Zeilen 29-37; Seite 10, Zeilen 27-35 * | 1-3 | |
| A | --- | 5,6,8 | |
| A | DE-A-2 728 555 (TOHO BESLON CO., LTD) <br> * Ansprüche 1-4,25-26; Seite 11, Zeilen 2-13 * | 10 | |

RECHERCHIERTE SACHGEBIETE (Int. Cl.4)

C 04 B 30/02
C 04 B 14/00
C 04 B 35/00

Der vorliegende Recherchenbericht wurde für alle Patentansprüche erstellt

| Recherchenort | Abschlußdatum der Recherche | Prüfer |
|---|---|---|
| DEN HAAG | 05-08-1988 | HAUCK, H.N. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)